Europäisches Patentamt

European Patent Office

Office européen des brevets

(19)

(11) Numéro de publication : **0 517 650 A1**

(12)

# DEMANDE DE BREVET EUROPEEN

(21) Numéro de dépôt : **92810365.4**

(22) Date de dépôt : **15.05.92**

(51) Int. Cl.$^5$ : **G05D 25/02**, E06B 9/00, H05B 37/02

(30) Priorité : **22.05.91 FR 9106160**

(43) Date de publication de la demande :
**09.12.92 Bulletin 92/50**

(84) Etats contractants désignés :
**AT BE CH DE ES GB IT LI NL SE**

(71) Demandeur : **SOMFY**
**8, Avenue de Margencel**
**F-74300 Cluses (FR)**

(72) Inventeur : **Thery, Marc**
**Betex**
**F-74540 Mures (FR)**
Inventeur : **Grehant, Bernard Jean-Pierre**
**12, Avenue du Stade**
**F-73000 Barberaz (FR)**
Inventeur : **Giust, Henri**
**Via Costa 10**
**I-20090 Trezzano s/Naviglio (MI) (IT)**

(74) Mandataire : **Meylan, Robert Maurice et al**
**c/o BUGNION S.A. 10, route de Florissant**
**Case Postale 375**
**CH-1211 Genève 12 - Champel (CH)**

(54) Installation de commande automatique du niveau d'éclairement d'un local.

(57) Installation de commande du niveau d'éclairement d'un local disposant d'ouvertures vers l'extérieur et agissant sur des moyens d'occultation des ouvertures ou sur des moyens d'éclairage artificiel variables associés à des opérateurs (OP) commandables, d'une part, au moyen de contacts (PA, PB) actionnables manuellement et, d'autre part, par une commande automatique comportant une unité logique de traitement (P, HO, CAN) en fonction d'une valeur de consigne correspondant à un niveau d'éclairement établi par l'utilisateur et enregistrée par l'ULT. Les moyens photosensibles (CL) mesurant l'éclairement sont montés sur un boîtier mobile (1) dans lequel est également monté, de préférence, l'ULT. La valeur de consigne est établie au moyen des contacts (PA, PB) et enregistrée dans l'ULT soit automatiquement, soit par l'actionnement d'un troisième contact (PC).

FIG 1

EP 0 517 650 A1

La présente invention concerne une installation de commande du niveau d'éclairement d'un local pourvu d'au moins une ouverture permettant l'entrée de la lumière naturelle et équipé de moyens d'occultation de ladite ouverture et/ou de moyens d'éclairage artificiel, moyens associés à des opérateurs de commande, cette installation comprenant des moyens photosensibles pour la mesure du niveau d'éclairement, des moyens de commande automatique des opérateurs contrôlés par les moyens photosensibles en fonction d'une consigne d'éclairement, des moyens de réglage et de stockage de cette consigne et des contacts actionnables manuellement pour donner aux opérateurs des ordres correspondant à plus ou moins d'éclairement.

Il est connu de commander des moyens d'occultation, tels que stores vénitiens ou dispositifs à lames orientables, au moyen d'un circuit électrique de commande piloté par une cellule photoélectrique. De telles installations sont décrites dans les brevets US 3 646 985 et 4 622 470. Dans ces installations, la cellule photoélectrique est fixe et la consigne de référence est déterminée au moyen d'un potentiomètre. Pour enregistrer une consigne correspondant au niveau d'éclairement désiré, l'utilisateur doit tout d'abord agir sur le potentiomètre, ce qui provoque la variation de l'état du moyen d'occultation. Il doit ensuite attendre que ce moyen d'occultation se stabilise, puis apprécier ensuite l'éclairement obtenu. Si celui-ci ne correspond pas au niveau souhaité, l'utilisateur doit répéter l'opération. La consigne est ainsi obtenue par approches successives et la pratique montre qu'il faut répéter au moins trois ou quatre fois l'opération pour obtenir approximativement le réglage désiré, ceci pour autant que l'éclairement ne varie pas pendant ces opérations en raison, par exemple, d'un passage de nuages.

L'invention a pour but de remédier à ces inconvénients et, plus particulièrement, de permettre de régler la consigne du niveau d'éclairement désiré en une seule opération et, en outre, à l'endroit désiré du local, endroit susceptible de varier avec la position de l'utilisateur dans le local.

L'installation de commande selon l'invention est caractérisée en ce que les moyens de réglage de la consigne sont constitués par les contacts actionnables manuellement, que les moyens de commande automatique comprennent une unité logique de traitement (ULT) reliée électriquement aux moyens photosensibles, aux contacts actionnables manuellement et aux opérateurs, cette unité logique de traitement étant programmée pour lire l'état des contact, les valeurs mesurées par les moyens photosensibles et émettre des signaux correspondant à plus ou moins d'éclairement en direction des opérateurs, d'une part en fonction de l'état desdits contacts et, d'autre part, en fonction de l'écart entre la valeur de consigne et la valeur mesurée par les moyens photosensibles, le programme de l'unité logique de traitement comprenant un sous-programme permettant d'enregistrer, dans une case mémoire, à un instant déterminé par l'utilisateur, une valeur d'éclairement mesurée par les moyens photosensibles, ledit sous-programme étant activé soit manuellement par un contact supplémentaire actionnable manuellement, soit automatiquement, et en ce qu'au moins les moyens photosensibles sont disposés sur ou dans un boîtier mobile.

L'utilisateur peut donc déterminer directement et instantanément la valeur de consigne par l'action sur les contacts correspondant à plus ou moins d'éclairement.

Les moyens photosensibles étant situés sur ou dans un boîtier mobile, ce boîtier peut être placé à l'endroit où l'utilisateur désire avoir l'éclairement souhaité, par exemple sur un plan de travail, un bureau, une table de chevet, etc.

La consigne d'un niveau lumineux n'a pas besoin d'être affichée puisqu'elle est mémorisée automatiquement à l'instant précis où l'utilisateur estime avoir atteint le réglage optimum. L'enregistrement peut être effectué soit volontairement par l'utilisateur, par l'actionnement d'un contact approprié, soit automatiquement, à son insu, lorsque l'utilisateur cesse d'actionner l'un des contacts correspondant à plus ou moins d'éclairement.

La transmission de la commande du boîtier à l'opérateur, respectivement aux opérateurs, peut se faire par tout moyen connu, en particulier sans fil.

Selon une forme d'exécution préférée de l'invention, l'unité logique de traitement est logée dans le boîtier mobile et les contacts d'actionnement sont également sur le boîtier.

Selon une autre forme d'exécution de l'invention, les contacts d'actionnement sont disposés dans une télécommande permettant de commander à distance le boîtier seul ou le boîtier et les opérateurs.

Le dessin annexé représente, à titre d'exemple, quelques formes d'exécution de l'installation selon l'invention.

La figure 1 représente le schéma d'une première forme d'exécution ou version de base.

La figure 2 représente l'ordinogramme du logiciel de la version de base.

La figure 3 représente, sous forme d'ordinogramme, le détail des procédures DIMINUER et AUGMENTER.

La figure 4 représente l'ordinogramme d'une variante d'exécution de la version de base dans laquelle l'enregistrement de la consigne est automatique.

La figure 5 représente un schéma d'une deuxième d'exécution de l'installation comprenant une télécommande à émetteur non directif.

La figure 6 représente le schéma d'une installation selon une troisième forme d'exécution comprenant une télécommande à émetteur directif.

La figure 7 représente l'ordinogramme du logiciel des exécutions représentées aux figures 5 et 6 dans la version à enregistrement manuel de la consigne.

La figure 8 représente l'ordinogramme du logiciel des exécutions représentées aux figures 5 et 6 dans la version à enregistrement automatique de la consigne.

La figure 9 représente une première forme d'exécution particulière du boîtier mobile.

La figure 10 représente une seconde forme d'exécution particulière du boîtier mobile.

La figure 11 est un schéma électrique illustrant l'utilisation de photopiles comme moyen photosensible.

La figure 12 représente une première variante du circuit de la figure 11.

La figure 13 représente une seconde variante du circuit de la figure 11.

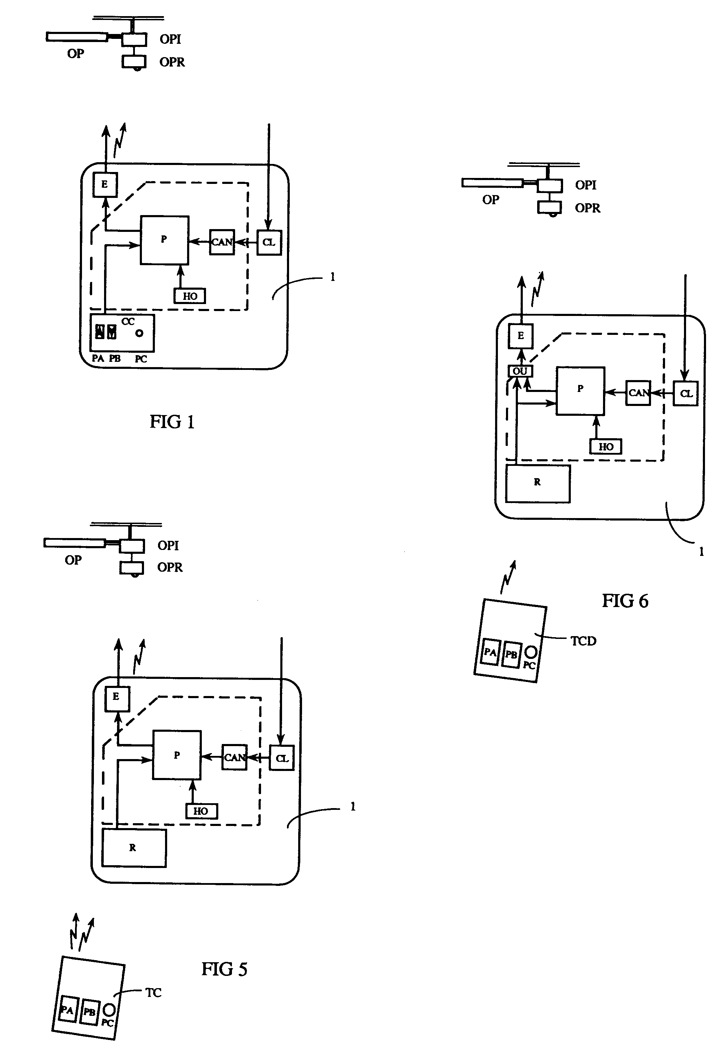

L'installation représentée à la figure 1 comprend essentiellement un boîtier mobile 1 contenant et portant tous les moyens de commande, à savoir des moyens photosensibles constitués par un capteur de luminosité CL, un processeur de contrôle P, un convertisseur analogique-numérique CAN permettant l'acquisition par le système processeur de la mesure analogique de l'éclairement mesuré par CL, un émetteur E et un clavier CC présentant trois touches PA, PB et PC. La touche PA actionne un contact commandant l'ouverture d'un moyen d'occultation, la touche PB un contact de fermeture de ce moyen, tandis que la touche PC actionne un contact de mise en mémoire de la consigne d'éclairement.

La processeur P contient un microprocesseur, de la mémoire vive, une mémoire de programme et des circuits d'entrée-sortie parallèles. Une partie de la mémoire vive est sauvegardée par pile ou en EEPROM. Le différentes fonctions P et CAN peuvent être remplies par un microcontrôleur de la famille MICRO 8051 ou INTEL 68HC11. Une horloge HO délivre un signal logique qui permet de réactiver périodiquement le processeur qui est ainsi mis en mode sommeil après chaque utilisation, de façon à réduire la consommation.

Le boîtier mobile 1 est destiné à commander au moins un opérateur OP par l'intermédiaire d'un récepteur OPR et d'une interface OPI. L'émetteur E du boîtier mobile et le récepteur OPR sont bien entendu adaptés l'un à l'autre pour assurer une transmission sans fil par tout moyen connu, par exemple de type électromagnétique infrarouge ou radio-fréquence.

Pour enregistrer une valeur de consigne, l'utilisateur actionne l'une des touches PA ou PB jusqu'à ce qu'il estime avoir atteint un niveau d'éclairement satisfaisant. Il actionne ensuite la touche PC pour enregistrer la consigne. L'enregistrement est de préférence effectué quelques fractions de secondes après que le bouton poussoir PC ait été relâché, ceci afin d'éviter une perturbation de la mesure du niveau lumineux par le mouvement de la main de l'utilisateur.

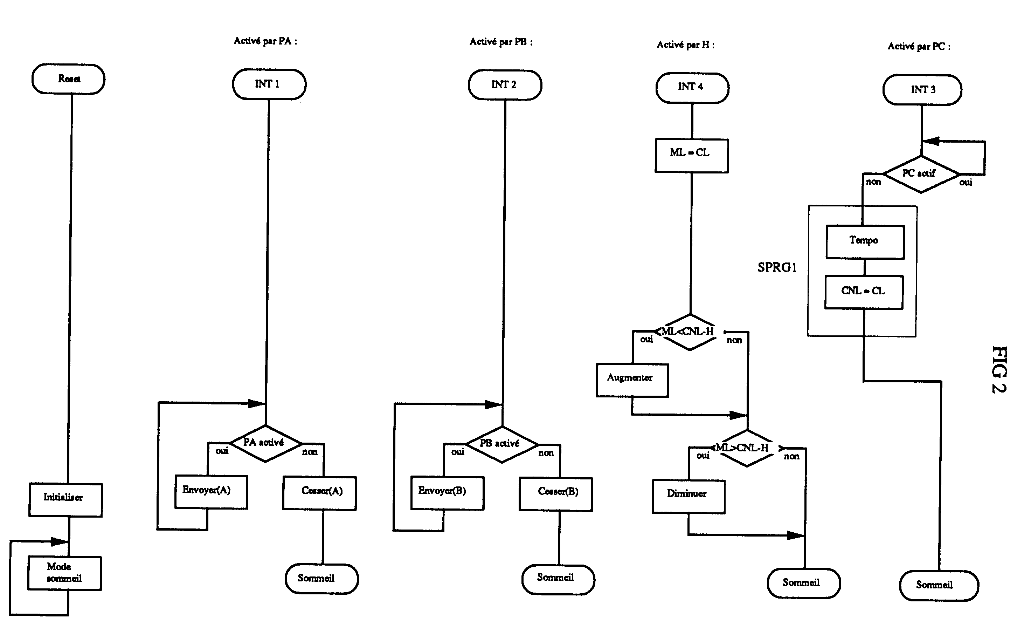

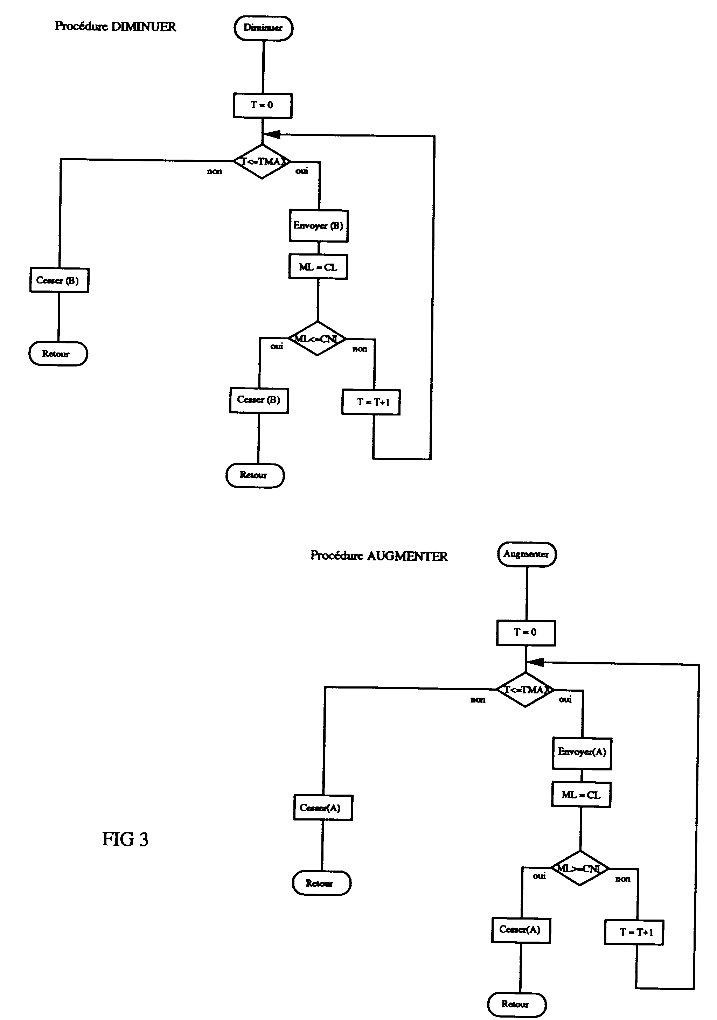

Les contacts correspondant aux touches PA et PB et au poussoir PC, de même que l'horloge HO sont raccordés à des entrées du port parallèle du processeur P. La gestion de ces entrées peut s'effectuer selon toute méthode connue, par scrutation ou par interruptions. C'est la gestion par interruptions qui a été retenue dans l'exemple décrit. Le module logiciel est représenté sous forme d'ordinogramme aux figures 2 et 3.

Les variables utilisées sont les suivantes :

A = commande de type "ouvrir".
B = commande de type "fermer".
CL = valeur mesurée sur le capteur de luminosité.
CNL = valeur mémorisée de consigne de niveau lumineux.
ML = valeur mémorisée de CL à l'instant courant.
H = hytérésis sur le niveau lumineux.
TMAX = durée maximum nécessaire à la manoeuvre complète du moyen d'occultation.
T = variable de 0 à TMAX.

La procédure Initialiser permet de configurer le processeur.

La procédure Sommeil permet de passer en mode sommeil.

La procédure Envoyer (X) permet d'envoyer la commande X (A ou B) par l'intermédiaire de l'émetteur (E).

La procédure Cesser (X) permet de cesser d'envoyer la commande précédente.

La procédure Tempo permet de générer un temps d'attente de l'ordre de la seconde.

La sortie du mode Sommeil s'effectue par reset ou interruption.

Les ordinogrammes des procédures AUGMENTER et DIMINUER de l'ordinogramme de la figure 2 sont reproduites à la figure 3.

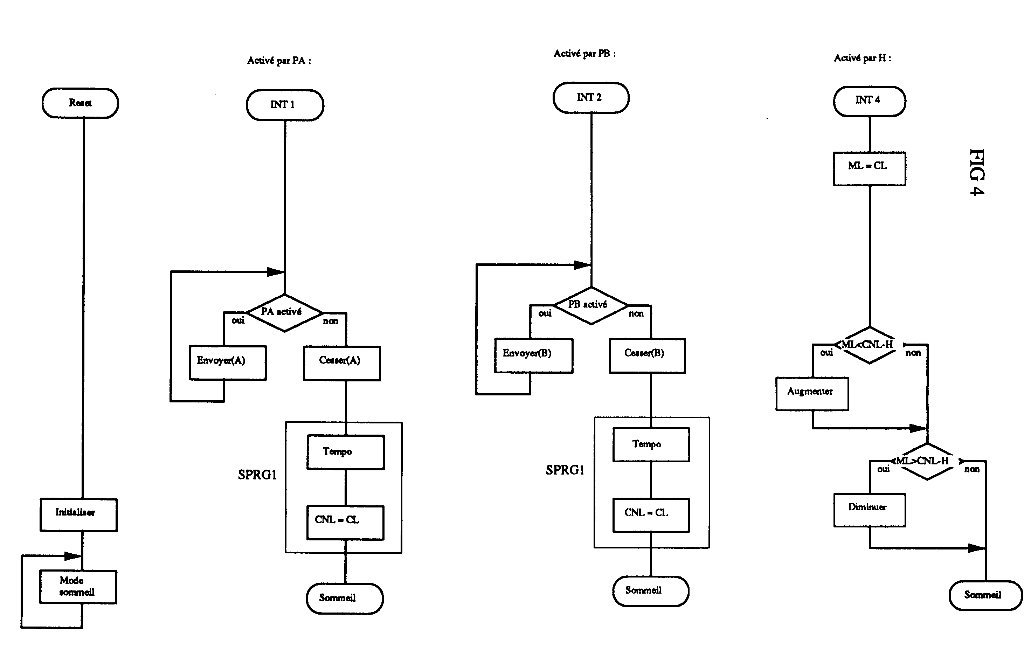

Selon une variante d'exécution, la consigne n'est pas enregistrée par l'actionnement d'un bouton poussoir, mais automatiquement, à l'insu de l'utilisateur, quelques fractions de secondes après que l'une des touches PA ou PB ait été relâchée. Le schéma matériel est le même que celui représenté à la figure 1 sans la touche PC. Le module logiciel est par contre différent. Celui-ci est représenté sous forme d'ordinogramme à la figure 4.

Le sous-programme SPRG 1 est activé automatiquement à l'issue de l'exécution des sous programmes INT 1 ou INT 2. La procédure TEMPO génère un temps d'attente, de telle sorte que l'enregistrement de la consigne n'est effectué que quelques fractions de secondes après que la touche PA ou PB ait été relâchée, ceci afin d'éviter une perturbation de la mesure du niveau lumineux par la main de l'utilisateur passant à proximité de la cellule photoélectrique.

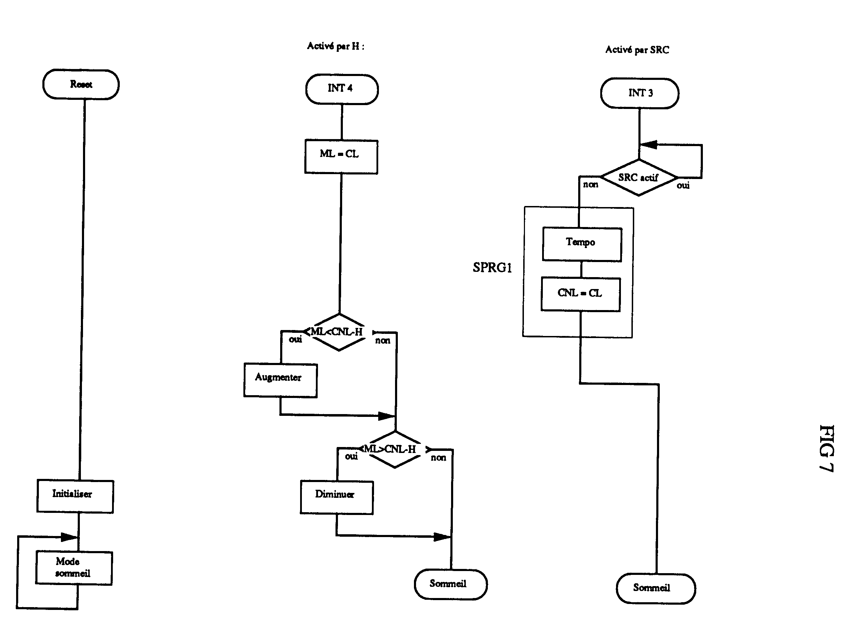

Dans la seconde forme d'exécution représentée à la figure 5, l'installation comprend une télécommande TC comportant les touches de commande PA et PB et, selon la forme d'exécution, le bouton poussoir PC. La télécommande TC comprend un émetteur non directif du même tye que l'émetteur E du boîtier et le boîtier comporte un récepteur R destiné à recevoir les signaux de la télécommande TC. La télécommande TC peut donc être une télécommande existante pour la commande à distance des récepteurs OPR des opérateurs.

Dans le boîtier mobile 1, le clavier est remplacé par un récepteur R, de même nature que récepteur OPR des opérateurs des moyens d'occultation. Ce récepteur R permet le décodage des signaux reçus et possède au moins deux sorties logiques SRA et SRB activées lors de la détection de la transmission d'une commande "Ouvrir" ou d'une commande "Fermer", ainsi qu'une troisième sortie SRC activée lors de l'actionnement du contact PC dans le cas où la télécommande est équipée d'un tel contact. Ces signaux logiques sont appliqués au processeur P en lieu et place des signaux PA, PB et PC.

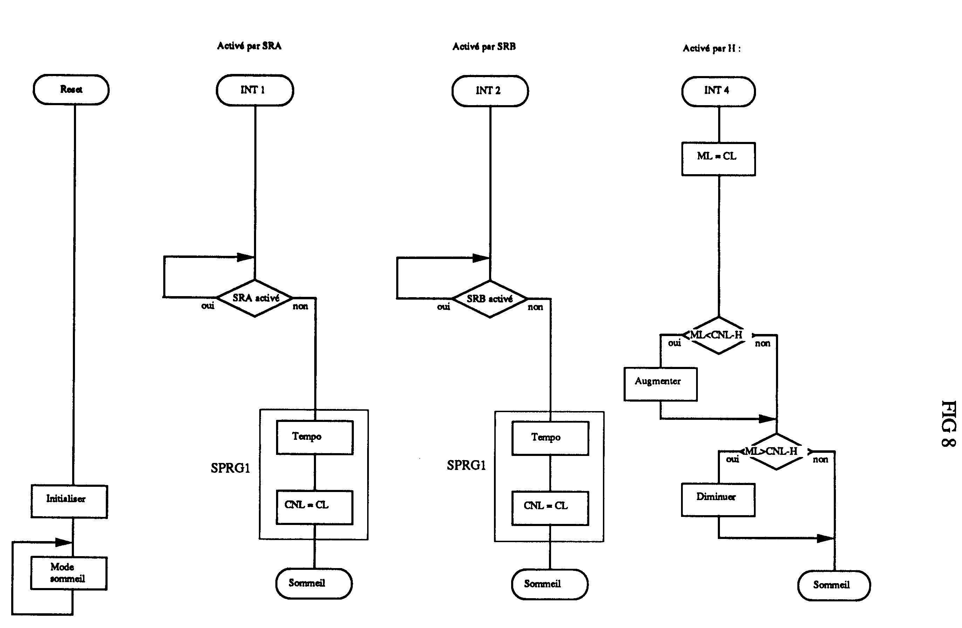

La figure 7 représente l'ordinogramme de la version à enregistrement manuel de la consigne, c'est-à-dire la version dans laquelle la télécommande comprend la touche PC.

La figure 8 représente l'ordinogramme de la version à enregistrement automatique de la consigne, c'est-à-dire la version dans laquelle la télécommande n'est pas équipée de la touche PC.

Les procédures AUGMENTER et DIMINUER sont les mêmes que dans la première forme d'exécution.

Les signaux de la télécommande TC commandent donc directement les opérateurs des moyens d'occultation.

Dans la troisième forme d'exécution représentée à la figure 6, il est également prévu une télécommande TCD, mais celle-ci comporte un émetteur directif. L'utilisateur doit donc orienter l'émetteur de la télécommande en direction du boîtier mobile 1 et c'est le boîtier qui réémet le signal vers le récepteur OPR de l'opérateur par son émetteur E. Pour assurer cette double fonction de l'émetteur E, il est prévu un circuit OU entre l'émetteur et, d'une part, et le récepteur R et le processeur P , d'autre part, comme ceci est représenté à la figure 6. Pour le reste, l'exécution du boîtier 1 est identique à celle de la figure 5.

Les ordinogrammes correspondants respectivement aux versions à enregistrement manuel et automatique de la consigne sont les mêmes que pour le mode d'exécution précédent.

Il est également possible d'utiliser une télécommande TCD directrice avec le boîtier de la figure 5. Dans ce cas, les ordinogrammes sont ceux des figures 2 et 4, selon que la consigne est enregistrée automatiquement ou non, dans lesquels PA, PB, (PC) sont respectivement remplacés par SRA, SRB, (SRC).

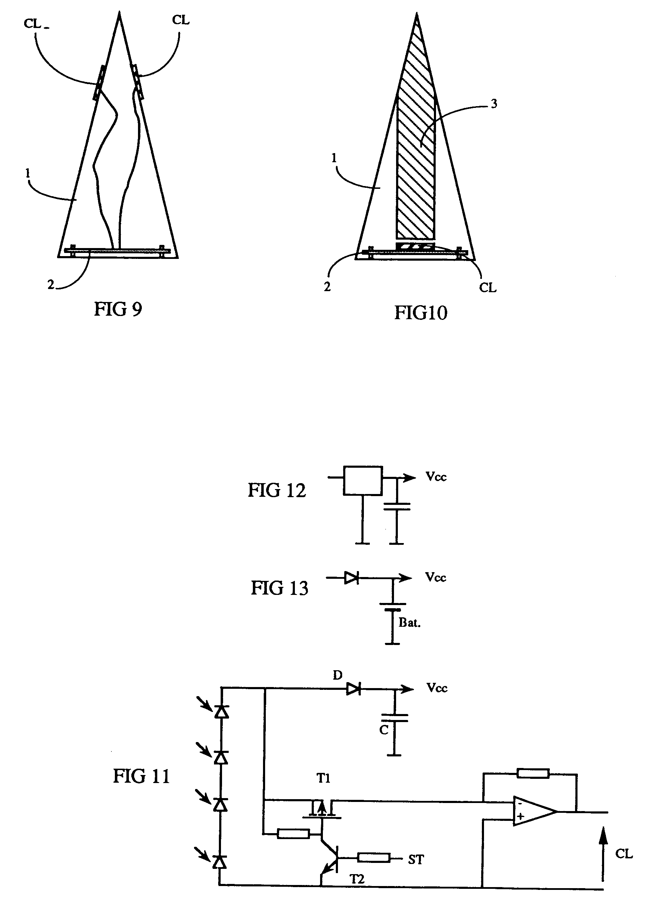

Afin d'éviter le dépôt d'objets sur les capteurs de luminosité, le boîtier mobile présente de préférence une forme allongée verticalement, par exemple une forme pyramidale ou conique comme représentée à la figure 9. Les capteurs de luminosité CL sont disposés dans la partie supérieure du boîtier. Dans l'exemple considéré, ils sont reliés par des fils à un circuit 2 disposé sur la base de la pyramide. Les touches, non représentées, sont montées sur l'une des faces de la pyramide, près de sa base.

Dans la forme d'exécution représentée à la figure 10, le boîtier mobile 1 présente également une forme pyramidale ou conique dont la partie centrale est constituée d'un piège et guide de lumière 3, le capteur de luminosité étant alors monté directement sur le circuit 2.

Le circuit de commande peut être alimenté par des photopiles. Dans ce cas, les photopiles peuvent être également utilisées pour assurer la mesure analogique de l'éclairement. Ceci exige la mise en court-circuit temporaire des photopiles pendant les périodes de mesure de l'éclairement. Un circuit assurant ces fonctions est représenté, à titre d'exemple, à la figure 11. Le circuit comporte un certain nombre de photopiles P1 à P4 en série entre l'émetteur d'un transistor T2 et une diode D dont l'autre borne est reliée à un condensateur C. Ce condensateur C est chargé par les photopiles à une tension Vcc qui est la tension d'alimentation du boîtier de commande. Le mise en court-circuit des photopiles est assurée par un transistor T1 commandé par un transistor T2 lui-même commandé par une sortie ST du port parallèle du processeur P. Quand ST = 1, T2 est saturé et T1 conduit et les photopiles sont à un potentiel proche de zéro si l'amplificateur opérationnel OA n'est pas saturé. On mesure alors à la sortie de cet amplicateur une grandeur CL représentant la valeur d'éclairement. La diode D évite la décharge du condensateur C pendant cette mesure d'éclairement.

Le condensateur C et la diode D peuvent être remplacés par tous les dispositifs classiques et connus, par exemple par un condensateur associé à un circuit de contrôle de charge (figure 12) ou par un accumulateur et une diode (figure 13).

Dans les exemples décrits, il est sans autre possible de remplacer les opérateurs de moyens d'occultation par des moyens d'éclairage artificiels.

La transmission entre le boîtier et l'opérateur pourrait être assurée par une liaison bifilaire.

Selon une autre variante d'exécution, l'unité logique de traitement pourrait être située hors du boîtier mobile, en particulier en un point fixe, et reliée au boîtier par une liaison galvanique ou sans fil.

## Revendications

1. Installation de commande du niveau d'éclairement d'un local pourvu d'au moins une ouverture permettant l'entrée de la lumière naturelle et équipée de moyens d'occultation de ladite ouverture et/ou de moyens d'éclairage artificiel, moyens associés à des opérateurs de commande, cette installation comprenant des moyens photosensibles (CL) pour la mesure du niveau d'éclairement, des moyens de commande automatique des opérateurs contrôlés par les moyens photosensibles en fonction d'une consigne d'éclairement, des moyens de réglage et de stockage de cette consigne et des contacts actionnables manuellement pour donner aux opérateurs des ordres correspondant à plus ou moins d'éclairement, caractérisée en ce que les moyens de réglage de la consigne sont constitués par lesdits contacts (PA, PB) actionnables manuellement, que les moyens de commande automatique comprennent une unité logique de traitement (P, HO, CAN) reliée électriquement, par liaison galvanique ou non, aux moyens photosensibles (CL), aux contacts actionnables manuellement (PA, PB, PC) et aux opérateurs (OP ; OPR), l'unité logique de traitement étant programmée pour lire l'état des contacts et les valeurs mesurées par les moyens photosensibles et émettre des signaux de plus ou moins d'éclairement en direction des opérateurs, d'une part en fonction de l'état desdits contacts (PA, PB) et d'autre part, en fonction de l'écart entre la valeur de consigne et la valeur mesurée par les moyens photosensibles, le programme de l'unité logique de traitement comprenant un sous-programme (INT 3 ; SPRG 1) permettant d'enregistrer dans une case mémoire, à un instant déterminé par l'utilisateur, une valeur d'éclairement mesurée par les moyens photosensibles, ledit sous-programme étant activé soit manuellement par un contact supplémentaire actionnable manuellement (PC), soit automatiquement, et en ce qu'au moins les moyens photosensibles sont disposés sur ou dans un boîtier mobile (1).

2. Installation selon la revendication 1, caractérisée en ce que l'unité logique de traitement est également dans le boîtier mobile (1).

3. Installation selon l'une des revendications 1 ou 2, caractérisée en ce que le programme de l'unité logique de traitement comprend en outre un sous-programme (INT 1) activé par le contact "plus d'éclairement" (PA) et un sous- programme (INT 2) activé par le contact "moins d'éclairement" (PB) permettant d'amener les opérateurs dans un état de manière à créer l'éclairement souhaité et un sous programme (INT 4) activé par une horloge externe (HO) pour la réactivation périodique du processeur de l'ULT.

4. Installation selon l'une des revendications 1 à 3, caractérisée en ce que le boîtier mobile (1) comporte un émetteur (E) relié à la sortie de l'unité logique de traitement et que chaque opérateur est associé à un récepteur (OPR) recevant les signaux émis par ledit émetteur.

5. Installation selon la revendication 4, caractérisée en ce que les contacts actionnables manuellement (PA, PB, PC) sont disposés sur le boîtier mobile (1).

6. Installation selon la revendication 4, caractérisée en ce que les contacts actionnables manuellement (PA, PB, PC) sont disposés sur un boîtier de télécommande (TC ; TCD) indépendant dudit boîtier mobile (1) et que le boîtier mobile comprend un récepteur (R) prévu pour recevoir les signaux émis par la télécommande qui comporte un émetteur prévu pour lire les états des contacts et émettre des signaux correspondant à plus et moins de lumière et, si un tel contact est prévu, un signal d'enregistrement de la consigne.

7. Installation selon la revendication 6, caractérisée en ce que l'émetteur de la télécommande (TCD) est directif et que le récepteur (R) du boîtier mobile est prévu pour recevoir les signaux de la télécommande et les transmettre simultanément à l'émetteur et à l'unité logique de traitement pour, d'une part, leur transmission à l'opérateur et, d'autre part, leur traitement par l'ULT.

8. Installation selon la revendication 6, caractérisée en ce que l'émetteur de la télécommande (TCD) est directif et que le récepteur (R) du boîtier mobile est prévu pour recevoir les signaux de la télécommande et les transmettre à l'unité logique de traitement.

9. Installation selon la revendication 6, caractérisée en ce que l'émetteur de la télécommande (TC) est non directif et que l'unité logique de traitement est programmée de manière à ce que sa sortie ne soit pas activée lorsque les signaux émanant des contacts "plus" ou "moins" de lumière sont émis par la télécommande.

10. Installation selon l'une des revendications 1 à 9, caractérisée en ce que le boîtier mobile est de forme allongée verticalement, notamment pyramidale ou conique, et comporte des cellules photoélectriques au voisinage du sommet.

11. Installation selon l'une des revendications 1 à 9, caractérisée en ce que le boîtier mobile est de forme allongée verticalement, en particulier pyramidale ou conique, et comprend un piège de lumière éventuellement associé à un guide de lumière.

12. Installation selon l'une des revendications 1 à 11, caractérisée en ce que les moyens photosensibles sont constitués par des photopiles (P1 à P4) assurant également l'alimentation du boîtier et, le cas échéant, de l'unité logique de traitement extérieure au boîtier, des moyens (T1, T2) étant prévus pour la mise en court circuit temporaire des photopiles pendant la mesure du niveau d'éclairement.

FIG 1

FIG 6

FIG 5

EP 0 517 650 A1

FIG 2

Reset → Initialiser → Mode sommeil

Activé par PA :
INT 1 → PA activé
oui → Envoyer(A)
non → Cesser(A) → Sommeil

Activé par PB :
INT 2 → PB activé
oui → Envoyer(B)
non → Cesser(B) → Sommeil

Activé par H :
INT 4 → ML = CL → ML<CNL-H
oui → Augmenter
non → ML>CNL-H
oui → Diminuer
non → Sommeil

Activé par PC :
INT 3 → PC actif
non / oui
SPRG1 [ Tempo → CNL = CL ] → Sommeil

Procédure DIMINUER

FIG 3

Procédure AUGMENTER

9

FIG 4

**Activé par H :**

INT 4 — ML = CL — ◇ ML<CNL-H ◇
- oui → Augmenter
- non → ◇ ML>CNL-H ◇
  - oui → Diminuer
  - non → Sommeil

**Activé par PB :**

INT 2 — ◇ PB activé ◇
- oui → Envoyer(B)
- non → Cesser(B) — SPRG1 [ Tempo — CNL = CL ] — Sommeil

**Activé par PA :**

INT 1 — ◇ PA activé ◇
- oui → Envoyer(A)
- non → Cesser(A) — SPRG1 [ Tempo — CNL = CL ] — Sommeil

Reset — Initialiser — Mode sommeil

FIG 7

Activé par SRC

INT 3

SRC actif — oui / non

SPRG1
Tempo
CNL = CL

Sommeil

Activé par H :

INT 4

ML = CL

ML<CNL-H — oui / non

Augmenter

ML<CNL-H — oui / non

Diminuer

Sommeil

Reset

Initialiser

Mode sommeil

FIG 8

CL ‿          CL

1

2

**FIG 9**

3

1

2

CL

**FIG10**

**FIG 12**          Vcc

**FIG 13**          Vcc

Bat.

D

Vcc

C

**FIG 11**

T1

ST

T2

CL

Office européen
des brevets

RAPPORT DE RECHERCHE EUROPEENNE

Numero de la demande

EP 92 81 0365

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 187 902 (LUTRON ELECTRONICS) <br> * abrégé; page 2, lignes 53-74; page 2, ligne 117 - page 3, ligne 9; figures 1-4 * | 1,4,5 | G 05 D 25/02 <br> E 06 B 9/00 <br> H 05 B 37/02 |
| A | WO-A-8 905 562 (LEHMUSVUO et al.) <br> * abrégé; page 6, ligne 30 - page 8, ligne 20; page 9, lignes 30-35; figure 1 * | 1 | |
| A | US-A-4 158 132 (O'DELL) <br> * abrégé; colonne 3, ligne 20 - colonne 4, ligne 14; figure * | 1,3 | |
| A | US-A-4 575 659 (PEZZOLO et al.) <br> * abrégé; colonne 9, lignes 24-39; figures 1,2 * | 1 | |
| A | EP-A-0 372 442 (ASEA BROWN BOVERI) <br> * abrégé; colonne 2, lignes 16-34; figure 1 * | 1,4 | |
| A | DE-A-3 304 962 (RADEMACHER) <br> * page 7, ligne 13 - page 8, ligne 22; figures 1,2 * | 1-5 | |
| A | FR-A-2 544 887 (SOMFY) <br> * page 1, ligne 1 - page 3, ligne 18; page 3, ligne 28 - page 4, ligne 12; figure 1 * | 1,3 | |

DOMAINES TECHNIQUES RECHERCHES (Int. Cl.5)

G 05 D 25/00
E 06 B 9/00
H 05 B 37/00
H 05 B 39/00
H 05 B 41/00

Le présent rapport a été établi pour toutes les revendications

| Lieu de la recherche | Date d'achèvement de la recherche | Examinateur |
|---|---|---|
| BERLIN | 31-08-1992 | BEITNER M.J.J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

14